(19)

Europäisches
Patentamt
European
Patent Office
Office européen
des brevets

(11) **EP 4 477 868 A1**

(12) **EUROPEAN PATENT APPLICATION**

(43) Date of publication:
**18.12.2024 Bulletin 2024/51**

(21) Application number: **23178783.9**

(22) Date of filing: **12.06.2023**

(51) International Patent Classification (IPC):
***F03B 13/18*** *(2006.01)*

(52) Cooperative Patent Classification (CPC):
**F03B 13/18;** F05B 2240/917; F05B 2240/93;
F05B 2260/406; F05B 2270/202; F05B 2270/328;
F05B 2270/336; F05B 2270/342

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **OE Systems AB**
**426 58 Västra Frölunda (SE)**

(72) Inventors:
• **SILJEÄNG, Jesper**
**426 58 Västra Frölunda (SE)**
• **KRON, Per**
**426 77 Västra Frölunda (SE)**

(74) Representative: **AWA Sweden AB**
**Box 45086**
**104 30 Stockholm (SE)**

(54) **WAVE ENERGY CONVERTER**

(57)    The present invention relates to a wave energy converter (10), comprising: a buoyant wave collector (12) adapted to float in the surface (14) of water (16), wherein the wave collector (12) has a leading edge (18a) and a trailing edge (18b); a platform (30) adapted to be submerged and positioned lower than the wave collector, wherein the wave collector is adapted to move relative to the platform; an extendable and retractable front attachment (36a) connecting a leading portion of the wave collector to the platform; and an extendable and retractable rear attachment (36b) connecting a trailing portion of the wave collector to the platform, wherein in at least one configuration the extendable and retractable front and rear attachments are configured to control the wave collector such that the attack angle ($\alpha$) of the wave collector towards an incoming wave (20) is increased when the wave collector meets the incoming wave, allowing the wave collector to catch and surf the wave.

Fig. 1

EP 4 477 868 A1

**Description**

<u>Technical field</u>

The present invention relates to a wave energy converter (WEC). The present invention also relates to a method of extracting wave energy using such a wave energy converter.

<u>Background art</u>

Wave power is the capture of energy of (sea/ocean) waves e.g. for electricity generation, and a machine that exploits wave power is usually referred to as a wave energy converter (WEC). Several types of wave energy converters have been proposed, such as surface attenuators, terminators, point absorber buoys, and oscillating wave surge converters. Surface attenuators use multiple floating segments connected to one another and that move with the waves to create a movement between the segments. An example of a terminator type WEC is the Salter Duck, which is duck- or cam-shaped and has a rotation axis near the water surface. Point absorber buoys use the waves' rise and fall to generate electricity. That is, point absorber buoys handle vertical movement of the wave, i.e. potential energy is absorbed by the system. Oscillating wave surge converters have one end fixed to a structure or the seabed while the other end is free to move ("inverted pendulum"), and energy is collected from the relative motion of the oscillating body compared to the fixed point.

An example of "inverse pendulum" is disclosed in US11028818 (OSCILLA POWER INC), wherein a wave energy converter includes a surface float, a reaction structure, a plurality of flexible tethers, and a plurality of drivetrains. Each flexible tether connects the surface float to the reaction structure. Each drivetrain is connected to a corresponding flexible tether. Each flexible tether has a length established to treat the system as an inverse pendulum to utilize a horizontal surge motion of the surface float to present tension at the corresponding drivetrain for production of electrical energy from the horizontal surge motion.

Moreover, US10767617 with the same applicant as US11028818 discloses a wave energy conversion system which includes a float body, a heave plate, a tether, and a controller, wherein the tether couples the heave plate to the float body, wherein the controller controls the tether between survivability modes, and wherein each survivability mode adjusts a tension and/or length of the tether. Various embodiments in US10767617 that can enhance survivability are: raising the heave plate up to the surface float, lifting the heave plate close to the surface float without mating the two, and submerging the surface float by ballasting the floating component of the wave energy converter such that it becomes negatively buoyant and sinks below the surface.

Moreover, US2007257491A1 discloses a marine device in front of a sea wall and configured to receive an incoming wave normal to a long axis of the marine device. A flotation chamber converts the wave energy into mechanical energy along one or more known directions, namely, the rotation of flotation chamber about its long axis. The flotation chamber includes an axial profile shown in FIG. 15a in US2007257491A1 that reacts to water surface level changes moving normal to the axis, wherein an incoming wave causes flotation chamber to rotate about its long axis and tilt back and forth, as shown in FIGS. 15A and 15B in US2007257491A1. Mooring lines attach to front and back portions of flotation chamber on opposite sides of the center of mass of the flotation chamber. Rotation of the flotation chamber about its axis causes mooring lines to stretch and contract. According to US2007257491A1, by using mooring lines on opposing sides of each flotation chamber, and on opposing ends, the electroactive polymer devices can stretch and contract with several different motions of chamber (height increase, rolling and tilting, for both incoming waves and transverse waves), allowing the marine device to generate power with almost any wave direction and water surface level change.

<u>Summary of the invention</u>

Notwithstanding the many different wave energy converters proposed, it is an object of the present invention to provide an improved wave energy converter, which in particular may extract more power per wave.

According to a first aspect of the invention, this and other objects are achieved by a wave energy converter (WEC), comprising: a buoyant wave collector adapted to float in the surface of water, wherein the wave collector has a leading edge and a trailing edge; a platform adapted to be submerged and positioned lower than the wave collector, wherein the wave collector is adapted (intended) to move relative to the platform; an extendable and retractable front attachment connecting a leading portion of the wave collector to the platform; and an extendable and retractable rear attachment connecting a trailing portion of the wave collector to the platform, wherein in at least one configuration the extendable and retractable front and rear attachments are configured to control the wave collector such that the attack angle $\alpha$ of the wave collector towards an incoming wave is increased when the wave collector meets the incoming wave, allowing the wave collector to catch and surf the wave so as to absorb horizontal and vertical energy of the wave.

The attack angle $\alpha$ of the wave collector may be construed as the angle between the wave collector's reference line and the horizontal plane (still water line). In case the wave collector has an airfoil-shaped profile, the reference line is the chord of the airfoil. Furthermore, the platform should be regarded as a (substantially) fixed or stationary point of the present wave energy converter.

The invention is at least partly based on the understanding that by controlling the wave collector via the front and rear attachments, more power can be extracted from each wave. Specifically, by controlling the wave collector such that its attack angle $\alpha$ is increased, for example from approximately 0 degrees up to 10-45 degrees, the power take-up area of the wave collector may be enlarged and the wave collector can better catch and also surf along with the wave. In this way, the wave collector of the present WEC can follow the wave during a longer time and distance than e.g. the surface float in US11028818. Specifically, the horizontal distance under which reaction forces are acting may be increased with a factor of 3-4 due to the ability to follow the wave. Furthermore, the present WEC can extract power from both vertical and horizontal movement of the wave, as opposed to conventional point absorber buoys that mainly handle vertical movement of the wave.

It can be noted that none of the aforementioned US11028818 and US2007257491A1 discloses controlling a wave collector via front and rear attachments such that the attack angle is increased towards an incoming wave, allowing the wave collector to catch and surf the wave.

The attack angle $\alpha$ may be increased to be in the range of 10-45 degrees when the wave collector meets the incoming wave. Moreover, the attack angle $\alpha$ may be increased up to 30 degrees or up to 45 degrees. Moreover, the attack angle $\alpha$ may be increased from approximately 0 degrees, e.g. $0\pm5$ degrees or $0\pm2$ degrees, or from 0 degrees.

The wave energy converter may further comprise means for determining the height of the incoming wave, wherein in the at least one configuration the extendable and retractable front and rear attachments are configured to control the wave collector such that the attack angle $\alpha$ towards the incoming wave is increased to a degree number within the range of 10-45 degrees based on the determined height of the incoming wave according to an inverse relationship between the attack angle and the (wave) height. That is, the higher the incoming wave, the lower the attack angle, and vice versa. This may avoid overloads and/or optimize the energy of the WEC.

In the at least one configuration, the rear attachment of the wave energy converter may be configured to retract to lower the trailing portion of the wave collector such that the attack angle $\alpha$ towards an incoming wave is increased when the wave collector meets the incoming wave. At the same time, the front attachment may substantially not retract. This may be an efficient way to increase the attack angle.

The trailing portion of the wave collector may have a lower buoyancy than the leading portion of the wave collector. That is, the buoyancy of the wave collector can be regarded as offset towards the leading edge of the wave collector. This may enable or at least facilitate lowering/pulling down the trailing portion of the wave collector to increase the attack angle $\alpha$.

Moreover, the centre of volume of the wave collector may be in front of the centre of gravity of the wave collector. This makes the wave collector "unstable", which means that it quickly can adapt to the incoming wave at the leading edge of the wave collector.

In the at least one configuration, the extendable and retractable front and rear attachments may be configured to control the wave collector such that the attack angle $\alpha$ is decreased in the end of the wave cycle, for example to $0\pm5$ degrees, before the wave collector is moved forward. By decreasing the attack angle (to $0\pm5$ degrees) in the end of the wave cycle, the retraction load required to return the wave collector after surfing to its initial position by the front and rear attachments may be reduced. Furthermore, it allows the wave collector to be faster on the way back compared to when it follows/surfs the wave, which in turn means that the time when reaction forces are active and power is extracted during one load cycle may be increased. The wave cycle may be defined as peak to peak (crest to crest).

The wave collector may be shaped (designed) such that its drag coefficient increases when the attack angle $\alpha$ is increased, and vice versa. Specifically, the wave collector should have a geometry with low drag coefficient $Cd_2$ when moving forward (attack angle $= 0\pm5$ degrees) and high drag coefficient $Cd_1$ when the attack angle $\alpha$ is increased (e.g. to 10-45 degrees). $Cd_1$ may for example be approximately $50\times Cd_2$ when $\alpha=45°$. Moreover, with an increased attack angle $\alpha$, the horizontal drag load may be increased because of added mass, i.e. the increased volume and weight of the water that the more upwardly directed wave collector "stops".

The wave collector may for example be a wing-like wave collector and/or have an airfoil-shaped profile. By this design of the wave collector, the retraction load required to move the wave collector forward to its initial position by the front and rear attachments is reduced. At the same time, the power take-up area of the wave collector will be enlarged when the attack angle is increased.

In the at least one configuration, the extendable and retractable front and rear attachments may be configured to control the wave collector such that the attack angle $\alpha$ of the wave collector first is increased to be in the range of 10-45 degrees and then is decreased to be $0\pm5$ degrees for each incoming wave. Hence, the attack angle may be repeatedly changed during operation of the wave energy converter.

The front attachment may comprise at least one front damper forming part of a power take-off system (of the WEC) and at least one front spring parallel connected to the at least one front damper, wherein the rear attachment comprises at least one rear damper forming part the power take-off system and at least one rear spring parallel connected to the at least one rear damper. The at least one front damper may for example be at least one front hydraulic cylinder with at least one front piston and rod. Likewise, the at least one rear damper may for example be at least one rear hydraulic cylinder with at least one rear piston and rod. The at least one front spring may be at least one mechanical front spring. Likewise, the at least one rear spring may be at least one mechanical rear spring.

The power take-off (PTO) system may further comprise accumulators connectable to each front and rear dampers, the accumulators including several high pressure (HP) output accumulators, each with a different pressure, and a high pressure (HP) input accumulator, wherein optionally the power take-off system further comprises a switch controllable to selectively connect either one of the high pressure output accumulators or the high pressure input accumulator to the at least one front damper and/or the at least one rear damper. By connecting the front damper(s) and/or the rear damper(s) to different accumulators of the PTO system, various configurations of the present WEC may be realized.

The wave energy converter may further comprise a control unit adapted to control the switch and/or which of the high pressure output accumulators the at least one front damper and/or the at least one rear front damper is/are connected to, typically based on monitored data and/or properties of the wave energy converter.

The at least one configuration may include a (passive) configuration in which the at least one rear spring is configured to retract to pull down the trailing portion of the wave collector such that the attack angle $\alpha$ is increased when the wave collector meets, and adapts to, the incoming wave. In case the trailing portion has a lower buoyancy than the leading portion, the trailing portion can readily be pulled down by the at least one rear spring, whereas the leading portion because of its higher buoyancy may not be pulled down by the at least one front spring. In this passive configuration, the wave collector will follow an elliptical wave motion. Specifically, in the passive configuration, the aspect ratio of the elliptical wave motion may be X:1, wherein X is in the range 2-3.

The at least one configuration may include a(n active) configuration in which the at least one rear spring and the at least one rear damper are configured to retract to pull down the trailing portion of the wave collector such that the attack angle is increased e.g. up to 45 degrees when the wave collector meets the incoming wave. In case the at least one rear damper is at least one hydraulic cylinder, it may for example be configured to pull down the trailing portion of the wave collector by connecting it to the aforementioned HP input accumulator, which will pressurize the at least one rear hydraulic cylinder. In case the trailing portion has a low buoyancy, the energy needed to pull down the trailing portion by the at least one rear damper is low, and it gives back more energy as it allows the wave collector to better catch and surf the wave and absorb more horizontal energy of the wave. Typically more energy may be extracted in the active configuration than in the passive configuration. In the active configuration, the wave collector will follow an elliptical wave motion. Specifically, in the active configuration, the aspect ratio of the elliptical wave motion may be X:1, wherein X is in the range 3-4.

After the trailing portion has been lowered/pulled down (e.g. in the active or passive configuration), the at least one front and rear dampers may be configured to extend when the wave collector surfs the wave and energy is extracted.

Also the at least one front and rear springs may generally be extended when the wave collector surfs the wave, before they retract towards their natural length in the end of the wave cycle to move the wave collector forward. When the wave collector is moved forward, energy is typically not extracted by the at least one front and rear dampers.

In the at least one configuration, the front attachment of the wave energy converter may be configured to become stiff/stop extending towards the end of the wave cycle due to extension of the at least one front spring, whereas the rear attachment is configured to allow the wave to further extend the rear attachment towards the end of the wave cycle, such that the attack angle $\alpha$ is decreased in the end of the wave cycle, for example to $0\pm5$ degrees. This may be a result of the at least one front spring being extended more than the at least one rear spring when the wave collector surfs the wave. The rear attachment may be configured to allow the wave to further extend the rear attachment towards the end of the wave cycle for example by connecting the at least one rear damper/hydraulic cylinder to a low(er) HP accumulator of the PTO system in response to the rear attachment being extended more than a pre-determined threshold.

Moreover, the at least one configuration may include a (partly submerged) configuration in which the front attachment of the wave energy converter is configured to become stiffer (so that it significantly exceeds the uplift buoyancy loads of the wave collector) when the wave collector surfs the wave in response to the front attachment being extended more than a predetermined threshold, causing the wave collector to dive and avoid the peak of the wave. This will avoid overloads in case the wave is large. Specifically, it will be avoided that the at least one front and rear hydraulic cylinders are overloaded and hit their most extended positions. The predetermined threshold may for example be in the range of 60-90%, for example 70%, extension of the front attachment. The front attachment may for example be configured to become stiffer when the wave collector surfs the wave in response to the front attachment being extended more than the predetermined threshold by then connecting the at least one front damper/hydraulic cylinder to the aforementioned HP input accumulator. Alternatively, the front attachment may include at least one additional, stronger front (mechanical) spring that the front attachment switches to in response to the front attachment being extended more than the predetermined threshold.

In a further (fully submerged) configuration, the extendable and retractable front and rear attachments are configured to retract such that the wave collector is fully submerged in the water, in particular without changing the buoyancy of the wave collector (and usually without lowering the platform). In this way, overloads in a very heavy sea state may be avoided. In this configuration, the wave collector may for example be fully submerged to a depth of up to 5 meters. The wave collector could be further submerged e.g. to a depth of up to 15 meters by also lowering the platform. The depth to which the wave collector should be fully submerged may depend on location/site, wave size, etc.

The (overall) buoyancy of the wave collector and loads of the front and rear attachments may be selected so that the wave collector has a submerged level in the range of 80-99%, such as approximately 90%, when in the water. In this way, loads of the front and rear attachments only have to be increased by approximately 10% to get the wave collector fully submerged in the above-mentioned fully submerged configuration. In other configurations, such as the passive and active configurations, this submerged level (e.g. approximately 90%) allows forces in the front and rear attachments to be high and constant and very close to maximum during the wave cycle. In the partly submerged configuration, the submerged level may vary between e.g. 80-100%. In the present application, "submerged level" may be defined as:

$$\text{Submerged level} = 1 - (\text{wave collector uplift volume force} - \text{wave collector weight} - \text{loads of the front and rear attachments})/\text{wave collector uplift volume force}$$

The length of the wave collector may for example be in the range of 10-150 meters, preferably in the range of 50-100 meters, such as 50 meters. The width (or chord length) of the wave collector may for example be in the range of 6-16 meters, such as 8 meters.

The platform may be adapted to allow the wave collector to rotate around the center of the platform for alignment to the incoming wave, preferably such that the wave collector is perpendicular to the wave direction/ parallel with the wave front, with the leading edge facing the incoming wave(s). This ensures a high level of energy extraction from the wave. Here, the platform may for example have an upper part to which the front and rear attachments are connected, which upper part is rotatable relative to a (non-rotatable) lower part of the platform around the platform's own axis.

A maximum water surface footprint of the wave collector as the wave collector catches and surfs incoming waves and rotates around the center of the platform may have a diameter being not more than 200%, preferably not more than 150%, of the length of the wave collector. This provides for a well-defined and compact footprint area at the surface of the water, which is very favourable e.g. when it comes to combining the wave energy converter with offshore wind power.

The platform may be a mid-water platform. In use, the mid-water platform may be anchored to the seabed. Alternatively, the platform may be placed on the seabed, for shallower waters.

According to a second aspect of the invention, there is provided a method of extracting wave energy using a wave energy converter according to the first aspect, wherein: the buoyant wave collector is floating in the surface of water; the platform is submerged; and the extendable and retractable front and rear attachments control the wave collector such that the attack angle α of the wave collector towards an incoming wave is increased when the wave collector meets the incoming wave, whereby the wave collector catches and surfs the wave so as to absorb horizontal and vertical energy of the wave. This aspect may exhibit the same or similar features and technical effects as the first aspect, and vice versa.

Brief description of the drawings

These and other aspects of the present invention will now be described in more detail, with reference to the appended drawings showing one or more embodiments of the invention.

Fig. 1 is a perspective view of a wave energy converter according to one or more embodiments of the present invention.
Fig. 2 is a side view of the wave energy converter of fig. 1.
Fig. 3 is a partial view of an embodiment of a power take-off system of the present wave energy converter.
Figs. 4a-b illustrate attack angles of the wave collector of the present wave energy converter.
Figs. 5a-e illustrate various modes or configurations of the present wave energy converter.
Figs. 6a-d illustrate the mode/configuration in fig. 5a in more detail.
Fig. 7a is a schematic top view of rotation of the wave collector.
Fig. 7b is a schematic top view of a maximum water surface footprint of the wave collector.
Fig. 8 is a schematic perspective view illustrating scalability of the present wave energy converter.
Figs. 9a-b illustrate various electrical layouts in conjunction with the present wave energy converter.

Detailed description

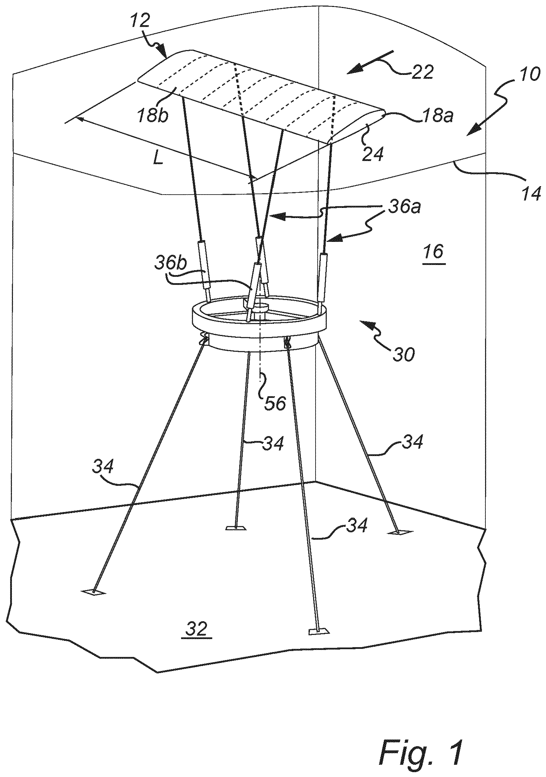

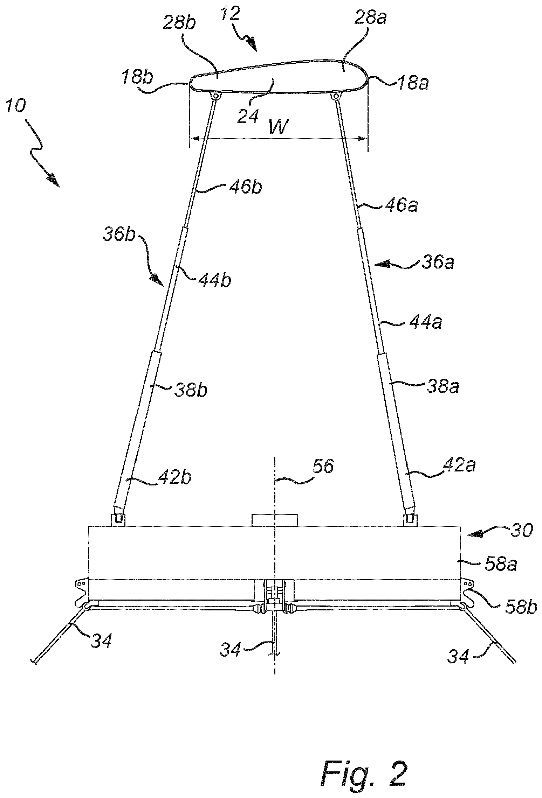

Figs. 1-2 illustrate a wave energy converter (WEC) 10 according to one or more embodiments of the present invention. The wave energy converter 10 may be construed as a terminator type WEC.

The wave energy converter 10 comprises a wing-shaped, buoyant wave collector 12. The wave collector 12 is adapted to float in the surface 14 of water 16. As such, the wave collector 12 may alternatively be referred to as a surface collector. The water 16 is typically the sea or ocean, but could alternatively be a (large) lake, for example.

The wave collector 12 has a leading edge 18a and a trailing edge 18b. The leading edge 18a and the trailing edge 18b are typically straight and parallel, and extend in a longitudinal direction of the wave collector 12. In operation, the leading edge 18a should face an incoming wave 20, as indicated by arrow 22 in fig. 1 designating the wave direction. The length L of the wave collector 12 in the longitudinal direction may for example be in the range of 10-150 meters, preferably in the range of 50-100 meters, such as 50 meters. With 50 meters long wave collector 12, approximately 1 MW can be extracted from incoming waves pending a site's wave climate.

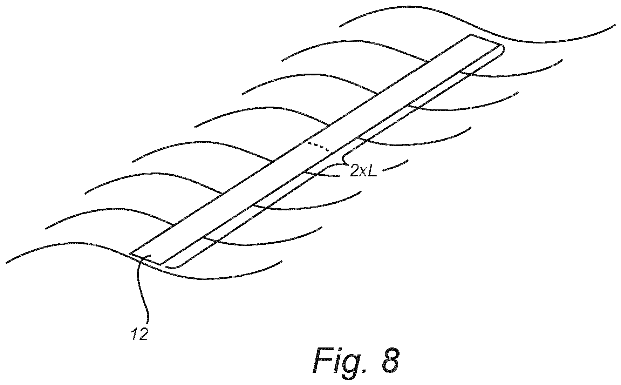

With further reference to fig. 8, the wave energy converter 10 may be scalable; by increasing the length of the wave collector 12, more energy can be extracted. In fig. 8, the overall length of the wave collector 12 is $2xL \approx 2$ x power.

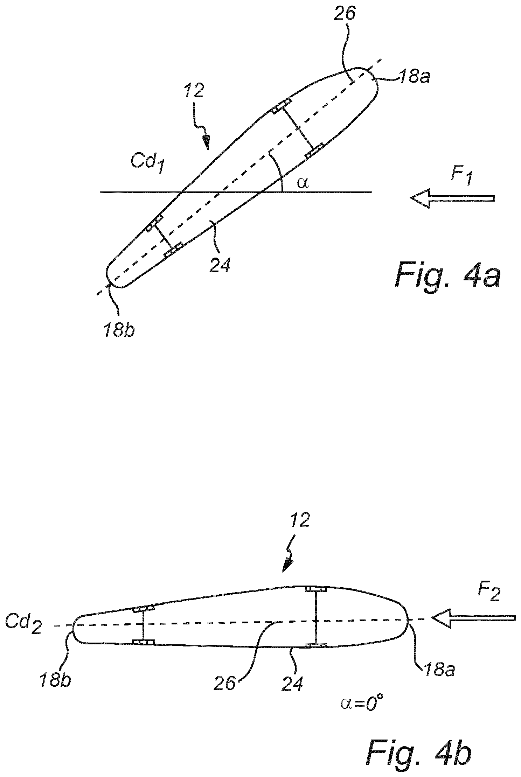

The wave collector 12 may have an airfoil-shaped profile (or cross-section) 24. The airfoil-shaped profile 24 may give the wave collector 12 a desired and variable drag coefficient, as will be discussed further hereinbelow. The airfoil-shaped profile 24 may be (substantially) uniform throughout the length L of the wave collector 12. The airfoil-shaped profile 24 may have a rounded leading edge corresponding to the leading edge 18a of the wave collector 12. The airfoil-shaped profile 24 may also have a rounded trailing edge corresponding to the trailing edge 18b of the wave collector 12, wherein the trailing edge 18b may have a smaller radius than the leading edge 18a. The airfoil-shaped profile 24 also has a chord 26 connecting the leading edge 18a and the trailing edge 18b. The chord 26 may serve as a reference line of the wave collector 12, and an attack angle $\alpha$ of the wave collector 12 may be defined as the angle between the chord 26 and the horizontal plane or direction as e.g. illustrated in fig. 4a. The chord length, corresponding to the width W of the wave collector 12, may for example be in the range of 6-10 meters, such as 8 meters.

Moreover, a trailing portion 28b of the wave collector 12 may have a lower buoyancy than a leading portion 28a of the wave collector 12, whereby the leading portion 28a has a higher buoyancy than the trailing portion 28b. Here, the buoyancy of the wave collector 12 can be regarded as offset towards the leading edge 18a of the wave collector 12. The leading portion 28a of the wave collector 12 may for example be the leading/front half of the wave collector 12, and the trailing portion 28b of the wave collector 12 may be the trailing/rear half of the wave collector 12. The ratio of the buoyancy of the trailing half 28b to that of the leading half 28a may for example be 1:n, wherein n is in the range of 2-10. The lower buoyancy of the trailing portion 28b may for example be realized by having a smaller floating element volume in the trailing portion 28b than in the leading portion 28a. Moreover, the centre of volume of the wave collector 12 may be in front of the centre of gravity of the wave collector 12.

The wave energy converter 10 may further comprise a platform 30. In operation, the platform 30 is submerged and positioned lower than the wave collector 12. The wave collector 12 is intended to move relative to the platform 30, which platform 30 should be a (substantially) fixed or stationary point of the wave energy converter 10. To this end, in case the platform 30 is a mid-water platform as in fig. 1, the platform 30 should be firmly anchored to the seabed 32 using moorings 34, for example four moorings 34. The moorings 34 may for example be synthetic mooring lines, typically ropes, and/or anchor chains. Alternatively, the platform 30 could be placed on the seabed (not shown), for shallower waters.

The wave energy converter 10 further comprises an extendable and retractable front attachment 36a connecting the leading portion 28a of the wave collector 12 to (the front of) the platform 30, and an extendable and retractable rear attachment 36b connecting the trailing portion 28b of the wave collector 12 to (the rear of) the platform 30.

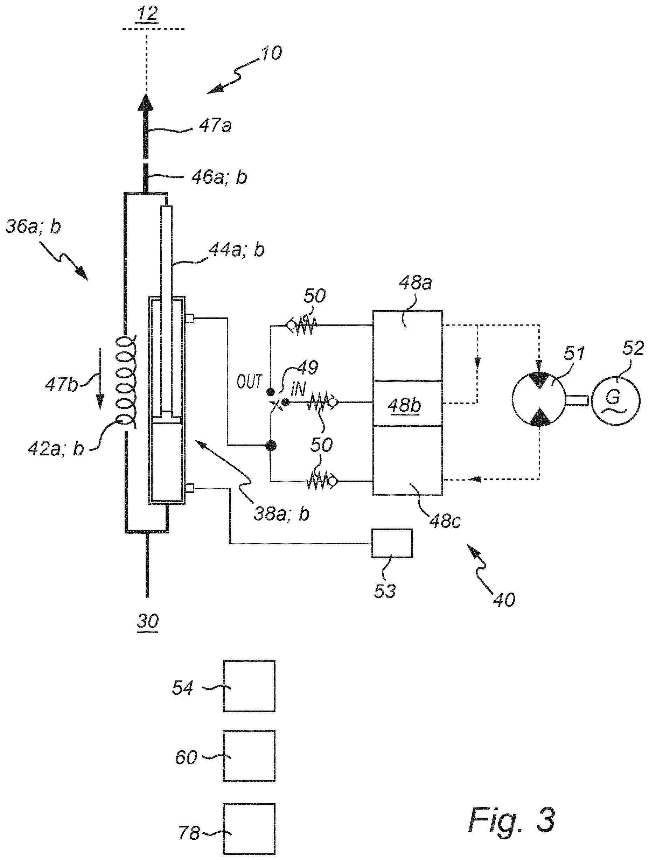

With further reference to fig. 3, the front attachment 36a may comprise at least one front damper 38a forming part of a power take-off system 40 of the WEC 10, and at least one front (mechanical) spring 42a parallel connected to the at least one front damper 38a. That is, the front damper 38a and front spring 42a are connected in parallel. The at least one front damper 38a may for example be at least one front hydraulic cylinder with at least one front (movable) piston and rod 44a. One end of each parallel front damper 38a and front spring 42a may be connected to the platform 30, for example by a ball joint, whereas the other end (including the front piston and rod 44a) may be connected to the wave collector 12 via a wire or rod (or the like) 46a of the front attachment 36a. In this way, the front piston and rod 44a may be pulled outwards when the wave collector 12 catches a wave 20, as illustrated by arrow 47a (also) representing the force from the wave 20. The at least one front spring 42a may for example be at least one front coil spring. The at least one front spring 42a may be used to pre-tension the WEC 10. Moreover, the at least one front spring 42a may (be configured to) retrieve the at least one front damper 38a to its initial position, as illustrated by arrow 47b (also) representing the retraction force from the front spring 42a. The (longitudinal/axial) extension/retraction of the front attachment 36a may be realized by (simultaneous) extension/retraction of the at least one front damper 38a and at least one front spring 42a. In the embodiment illustrated fig. 1, the front attachment 36a comprises two front dampers 38a (e.g. two front hydraulic cylinders each with a front piston and rod 44a) and two front springs 42a (and consequently two wires/rods 46a).

Likewise, the rear attachment 36b may comprise at least one rear damper 38b forming part of the power take-off system 40, and at least one rear (mechanical) spring 42b parallel connected to the at least one rear damper 38b. That is, the rear damper 38b and rear spring 42b are connected in parallel. The at least one rear damper 38b may for example be at least one rear hydraulic cylinder with at least one (movable) rear piston and rod 44b. One end of each parallel rear damper 38b and rear spring 42b may be connected to the platform 30, for example by a ball joint, whereas the other end (including the rear piston and rod 44b) may be connected to the wave collector 12 via a wire or rod (or the like) 46b of the rear attachment 36b. In this way, the rear piston and rod 44b may be pulled outwards when the wave collector 12 catches a wave 20, as illustrated by arrow 47a (also) representing the force from the wave 20. The at least one rear spring 42b may for example be at least one rear coil spring. The at least one rear spring 42b may be used to pre-tension the WEC 10. Moreover, the at least one rear spring 42b may (be configured to) retrieve the at least one rear damper 38b to its initial position, as illustrated by arrow 47b (also) representing the retraction force from the rear spring 42b. Like above, the (longitudinal/axial) extension/retraction of the rear attachment 36a may be realized by (simultaneous) extension/retraction of the at least one rear damper 38b and at least one rear spring 42b. In the embodiment illustrated fig. 1, the rear attachment 36b comprises two rear dampers 38b (e.g. two rear hydraulic cylinders each with a rear piston and rod 44b) and two rear springs 42b (and consequently two wires/rods 46b). Thus, this WEC 10 has four dampers 38a-b and four springs 42a-b in total.

The power take-off system 40 may further comprise accumulators 48a-c. The accumulators 48a-c may comprise several high pressure (HP) accumulators (out) 48a, each with a different pressure, such as high, medium, and low. The accumulators 48a-c may (also) comprise a high pressure (HP) accumulator (in) 48b. The high pressure (HP) accumulator (in) 48b may be connected to/fed by one or more of the HP accumulators (out) 48a. The accumulators 48a-c may (also) comprise a low pressure (LP) accumulator (in) 48c. The HP accumulators (out) 48a may be up to 200 bar, the HP accumulator (in) 48b may for example be 100 bar, and the LP accumulator 48c may be 10-20 bar (should exceed hydrostatic pressure at current depth). The (out) pressure should be higher than the (in) pressure, for example 200 bar (out) and 100 bar (in). The accumulators 48a-c may be connected to (an upper chamber) of the dampers/hydraulic cylinders 38a-b, e.g. as illustrated in fig. 3. Specifically, switch 49 of the power take-off system 40 may be controlled between two positions (out) and (in) so as to selectively connect either one of the HP accumulators (out) 48a or the HP accumulator (in) 48b to dampers/hydraulic cylinders 38a and/or 38b. The default state of the switch 49 may be (out). Moreover, only one of the HP accumulators (out) 48a can be connected at the same time. By connecting the dampers/hydraulic cylinders 38a-b to different HP accumulators (out) 48a, the pressure/load/stiffness/pre-tension of the dampers/hydraulic cylinders 38a-b may be adjusted (in steps, e.g. from low to high). Energy will typically be generated/absorbed/accumulated in the power take-off system 40 when the at least one front and rear pistons and rods 44a-b are extended (because of movement of the wave collector 12) and connected to one of the HP accumulators (out) 48a.

The power take-off system 40 may further comprise various valves including valves 50 illustrated in fig. 3. The power take-off system 40 may further comprise a hydraulic motor/turbine 51. The hydraulic motor/turbine 51 may be connected to the HP accumulators out 48a and the LP accumulator 48c. The power take-off system 40 may further comprise a generator 52. The generator 52 may be connected to the hydraulic motor/turbine 51. The power take-off system 40 may further comprise a compensation bladder (or low pressure accumulator) 53. The compensation bladder 53 may be connected to a lower chamber of the dampers/hydraulic cylinders 38a-b. The compensation bladder 53 may have a default pressure equal to the hydrostatic pressure at current depth. The compensation bladder 53 connected to the lower chamber can in addition be used to vary the total force acting on the wave collector 12 by changing the pressure (the total force depends on the ∆ pressure from upper and lower chamber), which allows the retracting force on wave collector 12 to be changed in smaller steps and hence allows more detailed optimization of the power extraction.

The power take-off system 40 may be at least partly positioned on and/or in the platform 30. Moreover, the accumulators 48a-c may be common for the (two) front and (two) rear dampers 38a-b, whereas the PTO system 40 may have a switch 49 for each of the front and rear dampers 38a-b, i.e. the PTO system 40 may comprise multiple switches 49.

The wave energy converter 10 may further comprise a control unit 54 adapted to control the switch 49 as well as connection of the dampers/hydraulic cylinders 38a-b to one of the HP accumulators (out) 48a, typically via valves of the power take-off system 40, so as to achieve various configurations etc. of the front and rear attachments 36a-b, as will be described in more detail hereinbelow. This control by the control unit 54 may be based on monitored data and/or properties of the WEC 10, such as one or more of wave height, spring position, piston position/movement/velocity, front/rear attachment extension, etc. Moreover, the control unit 54 may be adapted to calculate the position of the wave collector 12 in the wave 20 based on measured data (piston extraction length, velocity, accelerations, etc.), The control unit 54 may comprise a computer and/or at least one processor and typically software for executing instructions so as to control the switch 49 and/or valves of the power take-off system 40 accordingly.

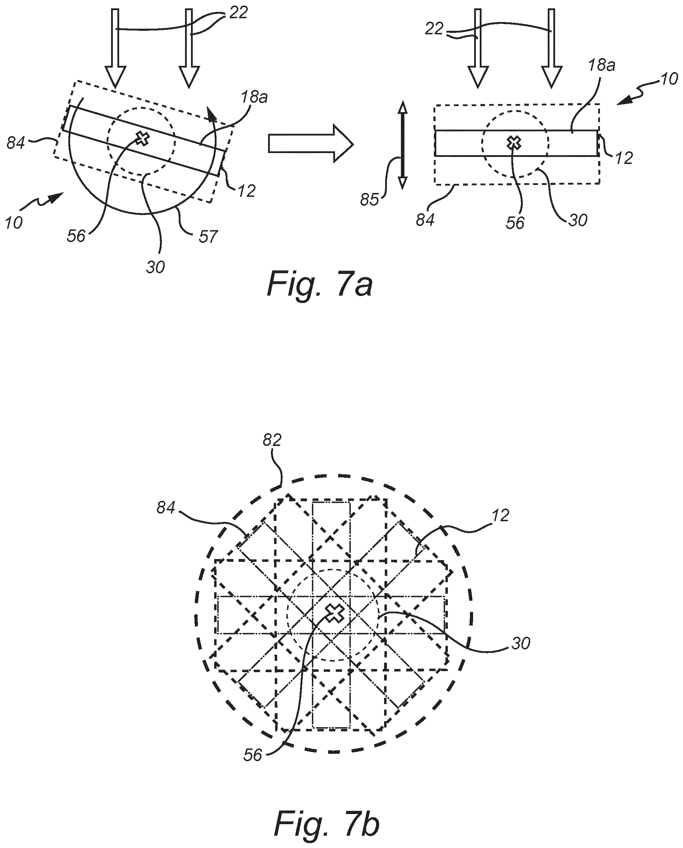

Moreover, the platform 30 may be adapted to allow the wave collector 12 to rotate around the center of the platform (as indicated by reference sign 56) for alignment to the incoming wave 20, preferably such that the wave collector 12 is perpendicular to the wave direction 22 (i.e. parallel with the wave front) as shown in figs. 1 and 7a, with the leading edge 18a facing the incoming wave 20. To this end, the platform 30 may have an upper part 58a to which the front and rear attachments 36a-b are connected, which upper part 58a is rotatable relative to a lower part 58b of the platform 30 around the platform's own axis 56. In case the platform 30 is a mid-water platform, the above-mentioned moorings 34 will be connected to the lower part 58b of the platform 30. Here, the wave energy converter 10 may have means 60 for determining the wave direction 22, and be adapted to rotate the wave collector 12 based on the determined wave direction 22, by rotating the upper part 58a of the platform 30 e.g. using a hydraulic motor (not shown). The means 60 for determining the wave direction 22 may for example be a local sensor on the wave energy converter 10, a (wireless) communication unit adapted to receive remote wave direction data (actual and/or forecasted), etc.

Generally, the extendable and retractable front and rear attachments 36a-b may be configured to control the attack angle $\alpha$ of the wave collector 12 (e.g. set $\alpha$ and/or increase $\alpha$ and/or decrease $\alpha$) by setting (e.g. by the control unit 54; before the wave 20) and optionally adjusting (e.g. by the control unit 54; during the wave cycle 62) the (retraction) load of the at least one extendable and retractable front attachment 38a and/or the at least one extendable and retractable rear attachment 38b.

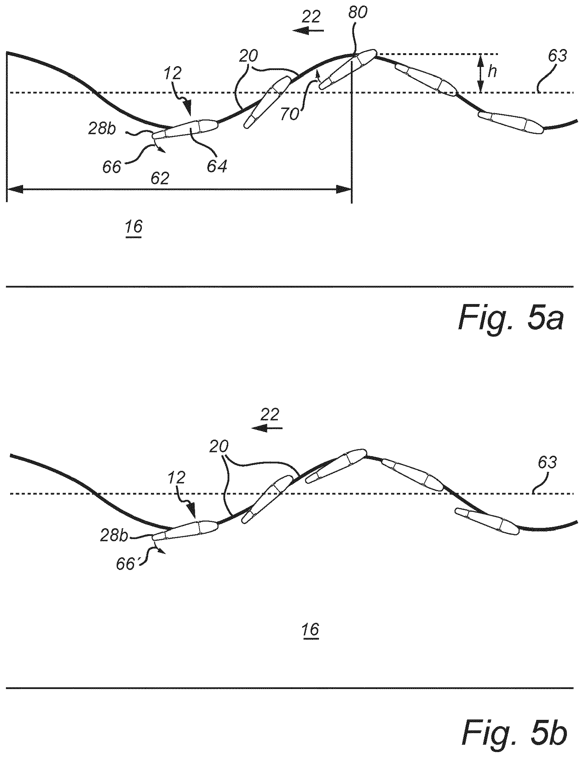

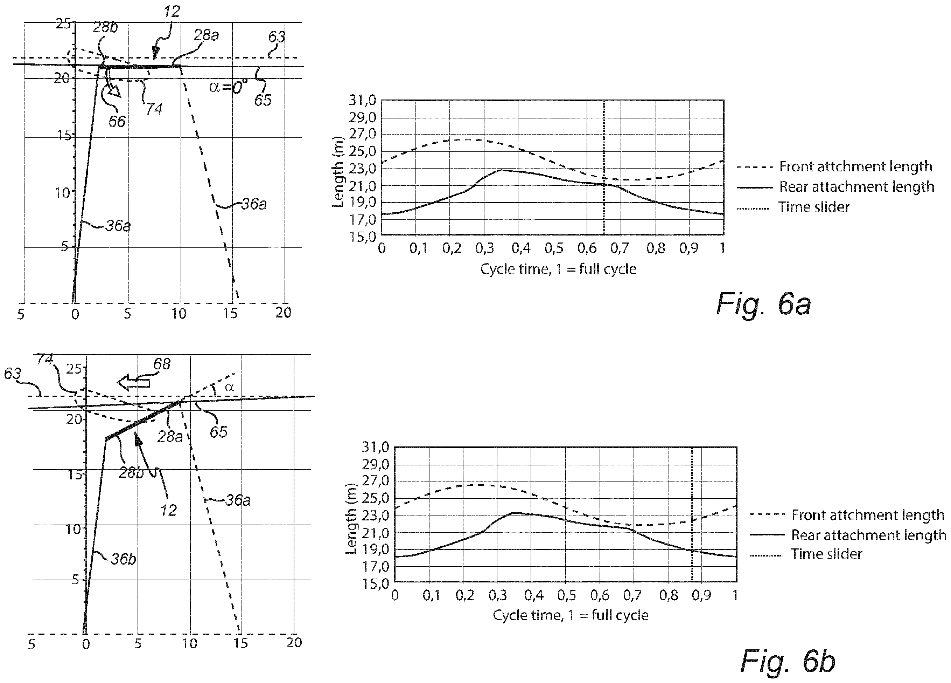

In accordance with an embodiment of the present invention, the extendable and retractable front and rear attachments 36a-b may be configured to control the wave collector 10 such that the attack angle $\alpha$ of the wave collector 10 towards an incoming wave 20 is increased when the wave collector 12 meets the incoming wave 20, for example from approximately 0 degrees to 10-45 degrees such as 30 degrees (fig. 4a), allowing the wave collector 12 to catch and surf along the wave 20 so as to absorb both horizontal and vertical energy of the wave 20, see for example figs. 5a-b and 6a-d. Specifically, the lower buoyancy of the trailing portion 28b of the wave collector 12 enables or at least facilitates lowering/pulling down the trailing portion 28b to thereby increase the attack angle $\alpha$. Moreover, the wave collector 12 will have an enlarged power take-up area and a high(er) drag coefficient $Cd_1$ when the attack angle $\alpha$ is in the range of 10-45 degrees (fig. 4a) due to the above-discussed shape/design of the wave collector 12, whereby the horizontal load $F_1$ from the wave 20 acting on the wave collector 12 becomes high, and the wave collector 12 can surf the wave 20 for a long(er) time and distance, which in turn can allow the WEC 10 to generate more energy. Moreover, with the increased attack angle $\alpha$, the horizontal (drag) load $F_1$ may increase (also) because of added mass, i.e. the increased volume and weight of the water that the more upwardly directed wave collector 12 "stops".

The extendable and retractable front and rear attachments 36a-b may further be configured to control the wave collector 12 such that the attack angle $\alpha$ is decreased in the end of the wave cycle 62 to $0\pm5$ degrees (fig. 4b) as the wave collector 12 adapts to the shape of the wave 20 before the wave collector 12 is moved forward. Here, the wave collector 12 will have a low(er) drag coefficient $Cd_2$ due to the above-discussed shape/design of the wave collector 12, whereby the horizontal load $F_2$ from the wave 20 acting on the wave collector 12 becomes low ($F_1 >> F_2$). Moreover, with the decreased attack angle $\alpha$, the horizontal (drag) load $F_2$ may decrease (also) because of lower or substantially no added mass, i.e. the weight of the water that the flatter wave collector 12 "stops". By decreasing the attack angle $\alpha$ to $0\pm5$ degrees, the retraction load required to return the wave collector 12 after surfing to its initial position by the front and rear attachments 36a-b may be reduced, the wave collector 12 can be faster on the way back compared to when it follows/surfs the wave 20 (which in turn means that the time when energy can be generated during one cycle may be increased), and/or overloads may effectively be avoided.

In (basic) operation of the wave energy converter 10, corresponding to a method of extracting wave energy using the wave energy converter 10, the buoyant wave collector 12 is floating in the surface 14 of water 16, and the platform 30 is submerged in the water 16.

The overall buoyancy of the wave collector 12 and loads of the front and rear attachments 36a-b may be selected so that the wave collector 12 has a submerged level in the range of 80-99%, such as approximately 90%, when the wave collector 12 is in the water 16, wherein:

$$\textit{Submerged level = 1 – (wave collector uplift volume force – wave collector weight – loads of the front and rear attachments)/wave collector uplift volume force}$$

In an example, wave collector uplift volume force = 5000kN, wave collector weight = 1500kN, and loads of the front and rear attachments = 3000kN, whereby the submerged level is 1 - (5000 - 1500 - 3000 )/5000 = 90%.

Moreover, the wave collector 12 should be aligned to incoming waves such as wave 20 (by rotation around the center 56 of the platform 30), such that the wave collector 12 is perpendicular to the wave direction 22, with the leading edge 18a facing the incoming waves, as illustrated in fig. 7a. During operation of the WEC 10, if the wave direction 22 changes, the wave collector 12 will be rotated accordingly.

Moreover, the extendable and retractable front and rear attachments 36a-b are used to control the wave collector 12 such that the attack angle $\alpha$ of the wave collector 12 towards an incoming wave 20 is increased, for example from approximately 0 degrees to 10-45 degrees, when the wave collector 12 meets the incoming wave 20, whereby the wave collector 12 catches and surfs the wave 20. Because of this movement by the wave collector 12 relative to the (fixed) platform 30, the front and rear attachments 36a-b including the at least one front and rear pistons and rods 44a-b thereof are extended, whereby energy is generated/absorbed/accumulated in the power take-off system 40. In the end of the wave cycle 62, the extendable and retractable front and rear attachments 36a-b may control the wave collector 12 such that the attack angle $\alpha$ is decreased to $0\pm5$ degrees, before the wave collector 12 is moved forward to its initial position.

When the wave 20 has passed the wave collector 12, it will have a reduced wave height because of the wave collector 12. Hence, the WEC 10/wave collector 12 has the ability to close out waves. This may for example be advantageous in combination with offshore wind power; by placing the WEC 10 or a plurality of WEC 10 in front of the wind turbine generator(s) with respect to a prevailing wave direction 22, the sea behind the WEC(s) 10 may be calmed, which in turn may facilitate access to and/or maintenance of the wind turbine generator(s). In particular, the WEC(s) 10 may increase the operation window for maintenance of the wind turbine generator(s).

Various configurations of the extendable and retractable front and rear attachments 36a-b will now be discussed in more detail with reference to figs. 5a-e and 6a-d. In figs. 6a-d, the wave period is 10,0 s, the wave length is 156.1 meters, and the wave height is 2 meters. Reference sign 63 designates water zero level, also referred to as still water line/level or calm sea level. Reference sign 65 designates the wave front. The wave cycle 62 may be defined as peak to peak, as indicated in fig. 5a.

In a first, active configuration illustrated in figs. 5a and fig. 6a-d, the at least one rear spring 42b and the at least one rear damper/hydraulic cylinder 38b may be configured to retract to pull down the trailing portion 28b of the wave collector 12 such that the attack angle $\alpha$ is increased e.g. up to 45 degrees when the wave collector 12 meets an incoming wave 20. Here, the wave collector 12 may have an initial position where the wave collector 12 is located in a wave trough 64 more or less above the platform 30 and has a substantially horizontal orientation ($0\pm5$ degrees attack angle $\alpha$), as illustrated in fig. 6a. This initial position may be the most forward position of the wave collector 12. From the initial position, the trailing portion 28b of the wave collector 12 is lowered as illustrated by arrow 66, due to the at least one rear spring 42b retracting (and thereby pulling down the trailing portion 28b) towards its natural length, due to the at least one rear damper/hydraulic cylinder 38b being retracted, and due to the lower buoyancy of the trailing portion 28b of the wave collector 12, whereas the leading portion 28a at least partly because of its higher buoyancy may not be pulled down by the at least one front spring 42a, resulting in the increased attack angle $\alpha$ ($\alpha \approx 25°$ in fig. 6b). From the time sliders to the right, one can see that the length of the front attachment 36a is substantially the same in fig. 6a and in fig. 6b, i.e. the front attachment 36a has substantially not retracted/extended, whereas the length of the rear attachment 36b is (approximately 4 meters) shorter in fig. 6b than in fig. 6a.

The at least one rear hydraulic cylinder 38b may be configured to retract to pull down the trailing portion 28b by setting the switch 49 to (in) when the wave collector 12 is in its foremost position, as controlled by the control unit 54, whereby the HP accumulator 48b pressurizes the at least one rear hydraulic cylinder 38b, which will pull down the rear of the wave collector 12. That is, the at least one rear damper/hydraulic cylinder 38b is here actively retracted by operating the switch 49. Since the trailing portion 28b has a lower buoyancy, the energy needed to pull it further down is low, and it gives back more energy than it consumes as it allows the wave collector 12 to better catch and surf the wave 20 and absorb more horizontal energy of the wave 20. For the at least one front damper/hydraulic cylinder 38a, the switch 49 may here be in the default setting (out).

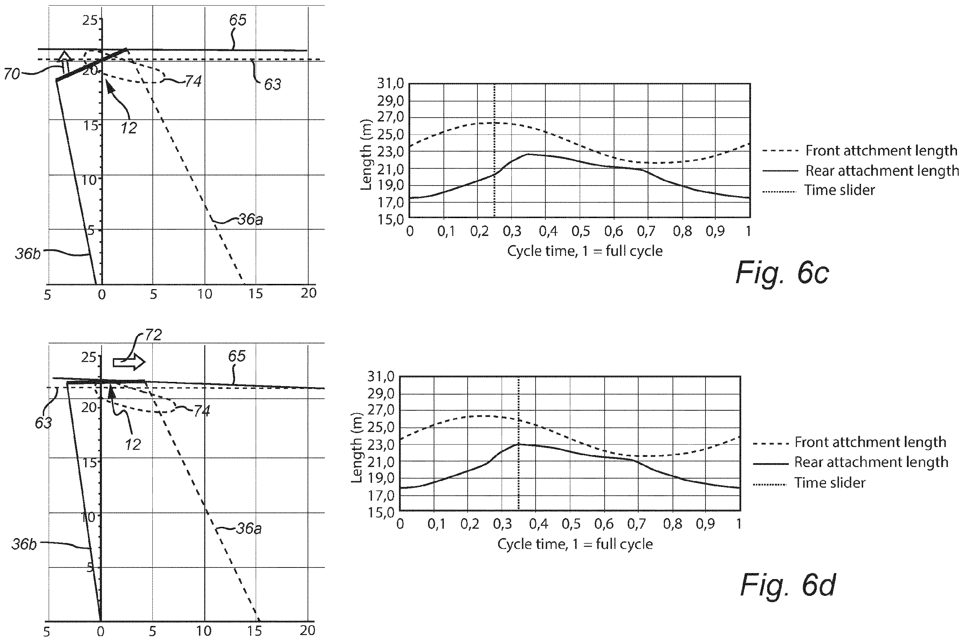

The wave 20 then pushes the wave collector 12 backwards, as illustrated by arrow 68. Due to the increased attack angle $\alpha$ and the high drag loads, the wave collector 12 may surf the wave 20 for a longer time and distance, to the position shown in fig. 6c. When the wave collector 12 surfs the wave 20, the front attachment 36a is extended, for example from approximately 22 meters to approximately 26 meters. Both the at least one front damper/hydraulic cylinder 38a and the at least one front spring 42a are here extended, wherein the extended at least one front damper/hydraulic cylinder 38a creates pressure in at least one of the HP accumulators (out) 48a. After the trailing portion 28b of the wave collector 12 has been pulled down by the at least one rear spring 42b and the at least one rear damper 38b and after the wave 20 starts pushing the wave collector 12 backwards, the switch 49 is set to (out), and the at least one rear damper 38b gets connected to one of the HP accumulators (out) 48a preferably having equal pressure to HP accumulator (in) 48b, as controlled by the control unit 54, whereby also the at least one rear damper 38b starts extracting energy in addition to the at least one front damper 38a. This may be triggered by the control unit 54 by measuring movement and velocity of the at least one front and rear pistons and rods 44a-b. From fig. 6b to fig. 6c, the rear attachment 36b is extended approximately 2 meters. Thus, the front attachment 36a may be extended more than the rear attachment 36b when the wave collector 12 surfs the wave 20, whereby most energy is extracted by the at least one front damper/hydraulic cylinder 38a. In figs. 6a-d, the power output is 1165.6 kW, the max front tension is 850 kN, and the max rear tension is 650 kN. A conventional type of wave buoy under the same conditions only had a power output of 306.3 kW. It can be noted that the movement of the wave collector 12 in figs. 6a-d is schematic, and realized through computer simulations. From fig. 6b to fig. 6c it can also be noted that the wave collector 12 is affected by both the hydrodynamic forces of the wave 20 and potential wave energy in the wave 20. Specifically in figs. 6a-d, the horizontal movement of the center of the wave collector 12 is 7.8 meters, and the vertical movement of the center of the wave collector 12 is 2.9 meters.

Towards the end of the wave 20/wave cycle 62, at or near the peak (crest) 80 of the wave 20, the front attachment 36a may become stiff due to the longer extension of the at least one front spring 42a (the return force from the at least one front spring 42a becomes (substantially) equal to the force from the wave 20 acting on the wave collector 12), whereas the rear attachment 36b may be configured to allow the wave 20 to further extend the rear attachment 36b towards the end of the wave cycle 62, such that the attack angle $\alpha$ is decreased (as illustrated by arrow 70) in the end of the wave cycle 62 to 0 $\pm 5$ degrees. The rear attachment 36b may be configured to allow the wave 20 to further extend the rear attachment 36b towards the end of the wave cycle 62 of the wave 20 by connecting the at least one rear damper/hydraulic cylinder 36b to a lower HP accumulator 48a of the power take-off system 40, as controlled by the control unit 54, in response to the rear attachment 36b being extended more than a pre-determined threshold.

From the position in fig. 6d, which may correspond to the most rear position of the wave collector 12, the wave collector 12 is moved forward to the initial position in fig. 6a as illustrated by arrow 72 due to the at least one front and rear springs 42a-b retracting towards their natural length once the peak 80 of the wave 20 has passed. When the wave collector 12 is moved forward, the front and rear dampers/hydraulic cylinders 36a-b should be connected to the LP accumulator 48c. This may be done via mechanical non-return valves (check valves) of the power take-off system 40. Hence, when the wave collector 12 is moved forward, energy is typically not extracted by the at least one front and rear dampers 36a-b. Moreover, because of the decreased attack angle $\alpha$ and the low drag loads, the wave collector 12 may here easily and quickly be returned to the initial position. It shall be noted that the movement of the water in the wave 20 is circular, and when the wave collector 12 is on its way back it also follows the movement of the water in the wave.

When the wave collector 12 reaches the initial position, the attack angle $\alpha$ may again be increased, and so on. Hence, the attack angle $\alpha$ may repeatedly be changed during operation of the wave energy converter 10. Moreover, in the first/active configuration, the wave collector 12 will follow an elliptical wave motion 74. Specifically, in the active configuration, the aspect ratio of the elliptical wave motion may be X:1, wherein X is in the range 3-4. Moreover, in the first/active configuration, the wave collector 12 may remain at the surface 14.

In a variant of the active configuration, the at least one rear hydraulic cylinder 38b may not be configured to pull down the trailing portion 28b, wherein the switch 49 remains (out). On the other hand, the HP (out) pressure is still controlled during the wave cycle, e.g. between high, medium, and low.

A second, passive configuration is illustrated in fig. 5b. The second configuration is similar to the first configuration, except that the at least one rear damper/hydraulic cylinder 38b is here not configured to (further) pull down the trailing portion 28b of the wave collector 12, resulting in that the attack angle $\alpha$ towards an incoming wave 20 is not increased as much as in the first active configuration. In other words, the trailing portion 28b of the wave collector 12 is here lowered less than in the first active configuration, as illustrated by arrow 66'. Moreover, the rear attachment 36b may here not be connected to a lower HP accumulator 48a towards the end of the wave cycle 62. Nevertheless, the attack angle $\alpha$ may be decreased towards the end of the wave cycle also in the second/passive configuration, because the front attachment 36a typically stops extending before the rear attachment 36b stops extending due to the loads from the dampers 38a-b and springs 42a-b. In the second/passive configuration, the wave collector 12 will follow a (less) elliptical wave motion. Specifically, in the passive configuration, the aspect ratio of the elliptical wave motion may be Y:1, wherein Y is in the range 2-3.

The wave energy converter 10, in particular the control unit 54 thereof, may be adapted to set the increased attack angle $\alpha$, for example in the first or the second configuration, depending on the height h of the incoming wave 20. To this end, the wave energy converter 10 may further comprise means 78 for determining the height h of the incoming wave, wherein the extendable and retractable front and rear attachments 36a-b are configured to control the wave collector 12 such that the attack angle $\alpha$ towards the incoming wave 20 is increased to a degree number within the range of 10-45 degrees based on the determined height h of the incoming wave 20 according to an inverse relationship between the attack angle $\alpha$ and the height h. That is, the higher the incoming wave 20, the lower the attack angle $\alpha$, and vice versa.

The means 78 for determining the height h of the incoming wave may for example be a local sensor on the wave energy converter 10, a (wireless) communication unit adapted to receive remote wave height data (actual and/or forecasted), etc. Moreover, the means 78 for determining the height h of the incoming wave may be connected to the control unit 54.

In the passive configuration, the specific attack angle $\alpha$ may for example be set by connecting the at least one front and rear hydraulic cylinders 38a-b to an appropriate accumulator of the aforementioned HP accumulators (out) 48a, as controlled by the control unit 54. Notably in the passive configuration the attack angle is not changed/increased by the control unit 54 during the wave cycle, but typically set for a large number of cycles. In other words, in the passive configuration the at least one front and rear hydraulic cylinders 38a-b operate at one specific value (e.g. 200 bar).

In the active configuration, the attack angle $\alpha$ may also be adjusted during the wave cycle 62, for example by temporarily setting the switch 49 for the at least one rear hydraulic cylinder 38b to (in) to pull down the rear of the wave collector 12 when the wave collector 12 meets an incoming wave 20 and/or by temporarily connecting the at least one rear damper/hydraulic cylinder 36b to a low(er) HP accumulator 48a towards the end of the wave cycle 62. That is, in the active configuration the control unit 54 may adjust the load of at least the rear hydraulic cylinder(s) 38b during the wave cycle.

The load/stiffness of the dampers/hydraulic cylinders 38a-b may also be adjusted based on (current/expected) wave period and/or (current/expected) average water level.

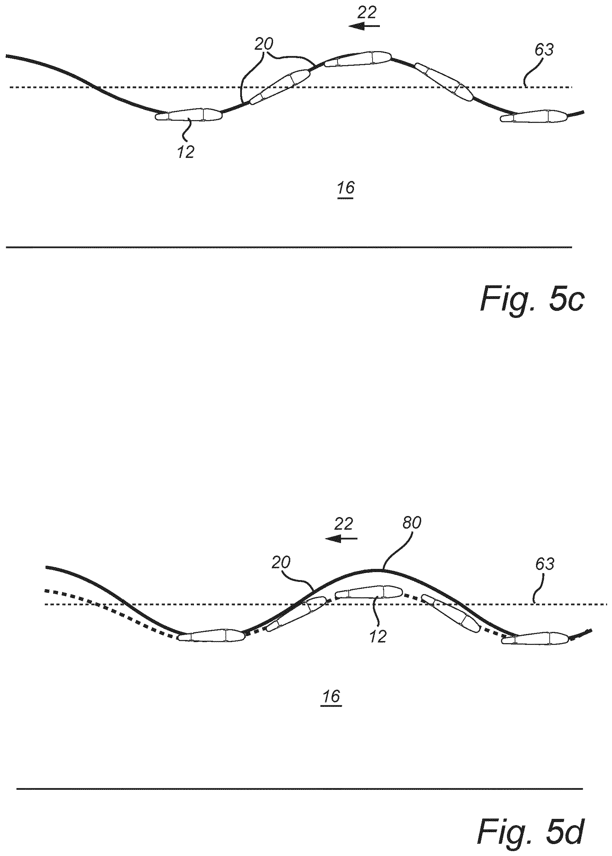

A third, stand-by configuration is illustrated in fig. 5c. The third configuration is similar to the second configuration, except that in the third configuration the front and rear dampers/hydraulic cylinders 38a-b may be connected to the LP accumulator (out) 48c throughout the wave cycle (whereby no power is extracted), and only the front and rear springs 42a-b are acting. In the third configuration, the wave collector 12 will follow a circular wave motion (1:1).

A fourth, partly submerged configuration is illustrated in fig. 5d. The fourth configuration may be similar to the first or second configuration, except that the front attachment 36a is configured to become stiffer when the wave collector 12 surfs the wave 20 in response to the front attachment 36a being extended more than a predetermined threshold, such that the wave collector 12 automatically dives though (and hence avoids) the peak 80 of the wave 20. This may avoid overloads in case the wave 20 is large. The predetermined threshold may for example be in the range of 60-90%, for example 70%, extension of the front attachment 36a. The front attachment 36a may for example be configured to become stiffer when the wave collector 12 surfs the wave 20 in response to the front attachment 36a being extended more than the predetermined threshold by then setting the switch 49 to (in) and thereby connect the at least one front damper/hydraulic cylinder to the HP accumulator (in) 48b of the power take-off system 40, as controlled by the control unit 54.

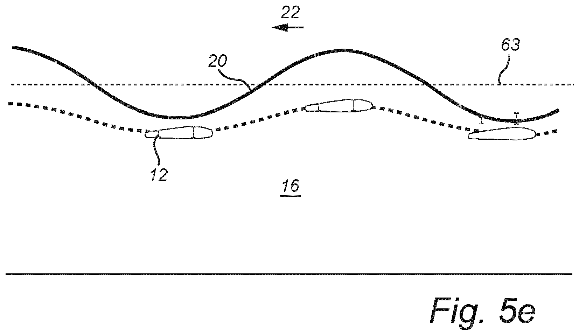

A fifth, fully submerged configuration is illustrated in fig. 5e. Here, the extendable and retractable front and rear attachments 36a-b are configured to retract such that the wave collector 12 is fully submerged in the water 14, in particular without changing the buoyancy of the wave collector 12. This may be achieved by increasing the loads of the front and rear attachments 36a-b such that the loads of the front and rear attachments 36a-b become higher than the buoyancy uplift of the wave collector 12, in particular by connecting the at least one front and rear dampers/hydraulic cylinders 38a-b to a higher pressure HP accumulator (out) 48a of the power take-off system 40, as controlled by the control unit 54. Alternatively or in addition, the spring stiffness/constant of the at least one front and rear springs 42a-b may be increased (increased pre-tension). In the fifth configuration, the wave collector may for example be fully submerged to a depth of up to 5 meters. The wave collector 12 could be further submerged e.g. to a depth of up to 15 meters by also lowering the platform 30.

A first variant of the fifth configuration is similar to the above-mentioned first, active configuration, albeit the wave collector 12 is fully submerged. A second variant of the fifth configuration (fig. 5e) is similar to the above-mentioned second, passive configuration, albeit the wave collector 12 is fully submerged. A third variant of the fifth configuration is similar to the above-mentioned third, stand-by configuration, albeit the wave collector 12 is fully submerged.

Overview of configurations:

| Config. | Extract power | Position | Motion |
| --- | --- | --- | --- |
| 1 (active) | Yes | Surface | Elliptical 3-4:1 |
| 2 (passive) | Yes | Surface | Elliptical 2-3:1 |
| 3 (stand-by) | No | Surface | Circular |
| 4 | Yes | Partly submerged | Reduced elliptical |
| 5_1 (sub_active) | Yes | Fully submerged | Reduced and flat elliptical |
| 5_2 (sub_passive) | Yes | Fully submerged | Reduced and flat elliptical |
| 5_3 | No | Fully submerged | Circular |

The extraction of power can be ranked between the configurations: 1 >2>4>5_1 >5_2 (in configurations 3 and 5_2 the power extraction is 0 kW).

The wave energy converter 10, in particular the control unit 54 thereof, may be adapted to select which configuration to operate in depending on the height h and the wave period of incoming waves such as wave 20, wherein the height h is determined by the means 78. For smaller sea states, a steep attack angle $\alpha$ will typically be desired, whereby the wave energy converter 10 may select the first active configuration. The first active configuration may also be useful for (very) long wave periods and for (very) short wave periods. For higher wave (e.g. 5 meters), a smaller attack angle $\alpha$ will be enough, whereby the wave energy converter 10 may select the second passive configuration. The lower angle $\alpha$ for higher waves is mainly to optimize the energy, since it costs energy to retract the trailing portion 28b of the wave collector 12 in a steeper angle, as discussed above. For even higher waves, the wave energy converter 10 may operate in the fourth partly submerge configuration, to avoid overloads. And if the sea state is very heavy, then the control unit 54 submerges the wave collector 12 to avoid larger loads (=the fifth configuration).

Moving on to fig. 7b, a maximum water surface footprint 82 of the wave collector 12 as the wave collector 12 catches and surfs incoming waves such as wave 20 and rotates around the center 56 of the platform 30 may have a diameter being not more than 200%, preferably not more than 150%, of the length L of the wave collector 12. This provides for a well-defined and compact footprint area, which is very favourable e.g. when it comes to combining the wave energy converter 10 with offshore wind power. For an exemplary length L of the wave collector 12 being 50 meters, the water surface footprint diameter may be 60-70 meters. In figs. 7a-b, rectangle 84 indicates the area, as seen from above, that the wave collector 12 takes up when it surfs an incoming wave and thereafter is returned to the initial position. An exemplary rectangle/area 84 may be L x hm meters, where L is the length L of the wave collector 12, and hm is the horizontal movement of the wave collector 12 when it surfs the wave 20 and thereafter is returned to the initial position (as indicated by arrow 85). The rectangle/area 84 may for example be approximately $50 \times 8$ m$^2$.

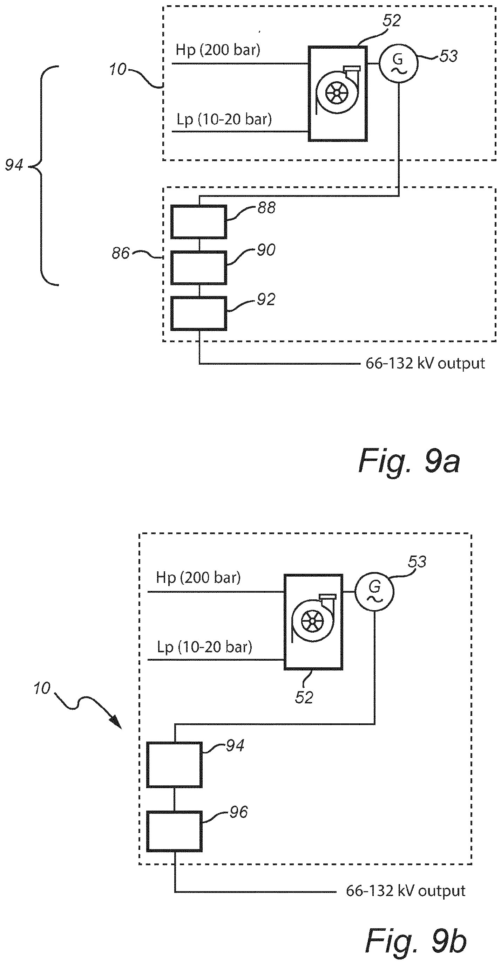

Figs. 9a-b illustrate various electrical layouts in conjunction with the wave energy converter 10.

In fig. 9a, the wave energy converter 10 is connected to a wind turbine generator (WTG) 86. Specifically, the generator 53 of the power take-off system 40 of the WEC 10 may be connected to a switch gear 88 of the wind WTG 86. The wind turbine generator 86 may further comprise a medium voltage unit 90 and an inverter 92. The medium voltage unit 90 and the inverter 92 are typically existing components of a WTG 86, whereby only the switch gear has to be added/retrofitted to an existing wind turbine generator 86 to connect the wave energy converter 10. The inverter 92 may provide a 66-132kV output. The wave energy converter 10 and the wind turbine generator 86 may together form a system 94.

In fig. 9b, the wave energy converter 10 comprises a medium voltage unit 94 and an inverter 96. This provides for a more self-contained wave energy converter 10. The medium voltage unit 94 is connected between the generator 53 and the inverter 96. The inverter 96 may provide a 66-132kV output.

The person skilled in the art realizes that the present invention by no means is limited to the preferred embodiments described above. On the contrary, many modifications and variations are possible within the scope of the appended claims. For example, instead of hydraulic dampers 38a-b, mechanical dampers could be used.

Moreover, if for example the platform is placed on the seabed, the platform could be excluded from the scope of the WEC 10.

Furthermore, certain features may be exercised without necessarily controlling the wave collector such that the attack angle $\alpha$ is increased when the wave collector meets the incoming wave, such as - but not limited to - the partly submerged configuration of claim 16, the fully submerged configuration of claim 17, the rotatable platform and/or footprint of claim 19, the scalable WEC of fig. 8, etc.

## Claims

1. A wave energy converter (10), comprising:

   a buoyant wave collector (12) adapted to float in the surface (14) of water (16), wherein the wave collector (12) has a leading edge (18a) and a trailing edge (18b);
   a platform (30) adapted to be submerged and positioned lower than the wave collector, wherein the wave collector is adapted to move relative to the platform;
   an extendable and retractable front attachment (36a) connecting a leading portion of the wave collector to the platform; and
   an extendable and retractable rear attachment (36b) connecting a trailing portion of the wave collector to the platform,
   wherein in at least one configuration the extendable and retractable front and rear attachments are configured to control the wave collector such that the attack angle ($\alpha$) of the wave collector towards an incoming wave (20) is increased when the wave collector meets the incoming wave, allowing the wave collector to catch and surf the wave so as to absorb horizontal and vertical energy of the wave.

2. A wave energy converter according to claim 1, wherein the attack angle ($\alpha$) is increased to be in the range of 10-45 degrees when the wave collector meets the incoming wave.

3. A wave energy converter according to claim 1 or 2, further comprising means (78) for determining the height (h) of the incoming wave, wherein in the at least one configuration the extendable and retractable front and rear attachments are configured to control the wave collector such that the attack angle ($\alpha$) towards the incoming wave is increased to a degree number within a range of 10-45 degrees based on the determined height of the incoming wave according to an inverse relationship between the attack angle and the height.

4. A wave energy converter according to any one of the preceding claims, wherein in the at least one configuration the rear attachment of the wave energy converter is configured to retract to lower the trailing portion of the wave collector such that the attack angle ($\alpha$) towards the incoming wave is increased when the wave collector meets the incoming wave.

5. A wave energy converter according to any one of the preceding claims, wherein the trailing portion (28b) of the wave collector has a lower buoyancy than the leading portion (28a) of the wave collector.

6. A wave energy converter according to any one of the preceding claims, wherein in the at least one configuration the extendable and retractable front and rear attachments are configured to control the wave collector such that the attack angle ($\alpha$) is decreased in the end of the wave cycle to $0\pm5$ degrees before the wave collector is moved forward.

7. A wave energy converter according to any one of the preceding claims, wherein the wave collector is shaped such that its drag coefficient increases when the attack angle ($\alpha$) is increased.

8. A wave energy converter according to any one of the preceding claims, wherein the wave collector is a wing-like wave collector and/or has an airfoil-shaped profile (24).

9. A wave energy converter according to any one of the preceding claims, wherein in the at least one configuration the extendable and retractable front and rear attachments are configured to control the wave collector such that the attack angle ($\alpha$) of the wave collector first is increased to be in the range of 10-45 degrees and then is decreased to be $0\pm5$ degrees for each incoming wave.

10. A wave energy converter according to any one of the preceding claims, wherein the front attachment comprises at least one front damper (38a) forming part of a power take-off system (40) and at least one front spring (42a) parallel connected to the at least one front damper, wherein the rear attachment comprises at least one rear damper (38b) forming part the power take-off system (40) and at least one rear spring (42b) parallel connected to the at least one rear damper.

11. A wave energy converter according to claim 10, wherein the power take-off system (40) further comprises accumulators (48a-c) connectable to each front and rear dampers, the accumulators including several high pressure output accumulators (48a), each with a different pressure, and a high pressure input accumulator (48b), and wherein the power take-off system (40) further comprises a switch (49) controllable to selectively connect either one of the high pressure output accumulators (48a) or the high pressure input accumulator (48b) to the at least one front damper and/or the at least one rear damper.

12. A wave energy converter according to claim 11, further comprising a control unit (54) adapted to control the switch and/or which of the high pressure output accumulators (48a) the at least one front damper and/or the at least one rear front damper is/are connected to based on monitored data and/or properties of the wave energy converter.

13. A wave energy converter according to any one of the claims 10 to 12, wherein the at least one configuration includes a configuration in which the at least one rear spring is configured to retract to pull down the trailing portion of the wave collector such that the attack angle ($\alpha$) is increased when the wave collector meets the incoming wave.

14. A wave energy converter according to any one of the claims 10 to 12, wherein the at least one configuration includes a configuration in which the at least one rear spring and the at least one rear damper are configured to retract to pull down the trailing portion of the wave collector such that the attack angle ($\alpha$) is increased when the wave collector meets the incoming wave.

15. A wave energy converter according to claim 6 and any one of the claims 10 to 14, wherein in the at least one configuration the front attachment of the wave energy converter is configured to become stiff towards the end of the wave cycle due to extension of the at least one front spring, whereas the rear attachment is configured to allow the wave to further extend the rear attachment towards the end of the wave cycle, such that the attack angle ($\alpha$) is decreased in the end of the wave cycle to $0\pm5$ degrees.

16. A wave energy converter according to any one of the preceding claims, wherein the at least one configuration includes a configuration in which the front attachment of the wave energy converter is configured to become stiffer when the wave collector surfs the wave in response to the front attachment being extended more than a predetermined threshold, causing the wave collector to dive and avoid the peak (80) of the wave.

17. A wave energy converter according to any one of the preceding claims, wherein in a further configuration the extendable and retractable front and rear attachments are configured to retract such that the wave collector is fully submerged in the water.

18. A wave energy converter according to any one of the preceding claims, wherein the buoyancy of the wave collector and loads of the front and rear attachments are selected so that the wave collector has a submerged level in the range of 80-99%, such as approximately 90%, when in the water (16).

19. A wave energy converter according to any one of the preceding claims, wherein the platform is adapted to allow the wave collector to rotate around the center (56) of the platform for alignment to the incoming wave, and wherein a maximum water surface footprint (82) of the wave collector as the wave collector catches and surfs incoming waves and rotates around the center of the platform has a diameter being not more than 200%, preferably not more than 150%, of the length (L) of the wave collector.

20. A method of extracting wave energy using a wave energy converter (10) according to any one of the preceding claims, wherein:

the buoyant wave collector (12) is floating in the surface (14) of water (16);
the platform (30) is submerged; and
the extendable and retractable front and rear attachments (36a-b) control the wave collector such that the attack angle (α) of the wave collector towards an incoming wave is increased when the wave collector meets the incoming wave, whereby the wave collector catches and surfs the wave so as to absorb horizontal and vertical energy of the wave.

*Fig. 1*

Fig. 2

Fig. 3

26

12

18a

$Cd_1$

$\alpha$

$F_1$

24

18b

*Fig. 4a*

12

$F_2$

$Cd_2$

18b

26    24

18a

$\alpha=0°$

*Fig. 4b*

*Fig. 5a*

*Fig. 5b*

22

20

63

12

16

*Fig. 5c*

22    80

20    63

12

16

*Fig. 5d*

*Fig. 5e*

Fig. 6a

--- Front attchment length
— Rear attachment length
···· Time slider

Length (m)

Cycle time, 1 = full cycle

Fig. 6b

--- Front attchment length
— Rear attachment length
···· Time slider

Length (m)

Cycle time, 1 = full cycle

Fig. 6c

- - - - Front attchment length
—— Rear attachment length
·········· Time slider

Length (m)

Cycle time, 1 = full cycle

Fig. 6d

- - - - Front attchment length
—— Rear attachment length
·········· Time slider

Length (m)

Cycle time, 1 = full cycle

Fig. 7a

Fig. 7b

2xL

12

*Fig. 8*

Hp (200 bar)

Lp (10-20 bar)

10

94

86

88

90

92

66-132 kV output

*Fig. 9a*

Hp (200 bar)

Lp (10-20 bar)

10

52

53

94

96

66-132 kV output

*Fig. 9b*

**EP 4 477 868 A1**

Europäisches
Patentamt

European
Patent Office

Office européen
des brevets

# EUROPEAN SEARCH REPORT

Application Number

EP 23 17 8783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2020/080537 A1 (ROSENBERG BRIAN [US] ET AL) 12 March 2020 (2020-03-12) | 1-4,6,7, 9-15, 17-20 | INV. F03B13/18 |
| Y | * paragraphs [0017] – [0020], [0025]; claim 8; figures 1,2 * | 5,8 | |
| A | | 16 | |
| X | US 2022/260047 A1 (WEAVER MATTHEW DEVORE [US] ET AL) 18 August 2022 (2022-08-18) | 1,20 | |
| Y | * paragraphs [0005] – [0009], [0107] – [0109]; figures 1-3 * | 5,8 | |
| A | WO 2022/261109 A1 (BARDEX CORP [US]) 15 December 2022 (2022-12-15) * paragraphs [0104], [0138]; figures 2,6 * | 1-20 | |
| A | US 2008/238102 A1 (WEGENER PAUL T [US] ET AL) 2 October 2008 (2008-10-02) * paragraphs [0002], [0034]; claims 11,12; figures 2A,2B * | 1-20 | |

| | | TECHNICAL FIELDS SEARCHED (IPC) |
|---|---|---|
| | | F03B |

The present search report has been drawn up for all claims

| Place of search | Date of completion of the search | Examiner |
|---|---|---|
| Munich | 31 October 2023 | Lux, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27

## ANNEX TO THE EUROPEAN SEARCH REPORT
## ON EUROPEAN PATENT APPLICATION NO.

**EP 23 17 8783**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-10-2023**

| Patent document cited in search report | | | Publication date | Patent family member(s) | | | Publication date |
|---|---|---|---|---|---|---|---|
| US | 2020080537 | A1 | 12-03-2020 | US | 2020080537 | A1 | 12-03-2020 |
| | | | | US | 2021262430 | A1 | 26-08-2021 |
| US | 2022260047 | A1 | 18-08-2022 | NONE | | | |
| WO | 2022261109 | A1 | 15-12-2022 | US | 2022403810 | A1 | 22-12-2022 |
| | | | | WO | 2022261109 | A1 | 15-12-2022 |
| US | 2008238102 | A1 | 02-10-2008 | CA | 2564703 | A1 | 13-10-2005 |
| | | | | EP | 1733142 | A2 | 20-12-2006 |
| | | | | US | 2008238102 | A1 | 02-10-2008 |
| | | | | WO | 2005094450 | A2 | 13-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11028818 B
- US 10767617 B
- US 2007257491 A1